# EUROPÄISCHE PATENTSCHRIFT

(11) **EP 1 120 875 B1**
(45) Veröffentlichungstag und Bekanntmachung des Hinweises auf die Patenterteilung: **12.03.2003**
(21) Anmeldenummer: 00128028.8
(22) Anmeldetag: 21.12.2000
(51) Int. Cl.: H02G 3/12

(54) **In einem Geräteeinbaukanal zu montierendes Gerät**
Apparatus to be mounted in a trunking with built-in apparatus
Appareil à monter dans une canalisation à appareils incorporés

(30) Priorität: 27.01.2000 DE 20001343 U
(43) Veröffentlichungstag der Anmeldung: 01.08.2001
(73) Patentinhaber: Tehalit GmbH & Co. KG, 67716 Heltersberg (DE)
(72) Erfinder: Schneckmann, Horst, 67705 Trippstadt (DE); Kauf, Peter, Dipl-Ing., 66482 Zweibrücken (DE); Schmitt, Erwin, 67659 Kaiserslautern (DE); Schnurr, Richard, 66957 Vinningen (DE)
(74) Vertreter: Patentanwälte Möll und Bitterich

(56) Entgegenhaltungen:
- EP-A- 0 913 902

## Beschreibung

Die Erfindung betrifft ein in einem Geräteeinbaukanal zu montierendes Gerät in Form einer Geräteeinbaudose oder eines Elektro-Installationsgerätes gemäß dem Oberbegriff des Anspruchs 1.

Der frontrastende Einbau von Geräteeinbaudosen oder Elektro-Installationsgeräten in Geräteeinbaukanäle ist bekannt. Die Einbaugeräte sind zu diesem Zweck mit speziell geformten Halterungen ausgerüstet, die mit dem Deckelhalteprofil des Kanals kooperieren. Um zu verhindern, dass das frontmontierte Gerät versehentlich aus dem Kanal herausgezogen werden kann, werden geeignete Sicherungselemente verwendet.

Aus der DE-A 41 20 939 ist eine Geräteeinbaudose bekannt, die von vorne in einen Kanal eingebaut werden kann. Diese Dose besitzt an ihren den Deckelhalteprofilen des Kanals zugewandten Seitenwänden federnde Haltezungen. Diese spreizen sich hinter dem Deckelhalteprofil des Kanals auf. Dadurch sitzt die Geräteeinbaudose unverrückbar im Kanal.

Eine weitere derartige Geräteeinbaudose ist bekannt aus der EP 0 913 902 A. Auch diese Dose besitzt an ihren den Deckelhalteprofilen des Kanals zugewandten Seitenwänden federnde Haltezungen, die sich hinter dem Deckelhalteprofil des Kanals aufspreizen. Die Zungen sind mit je zwei scharfen Blechkanten ausgerüstet, die sich in die Deckelhalteprofile eingraben und so für eine formschlüssige Verbindung zwischen Dose und Kanal sorgen. Dadurch sitzt auch diese Geräteeinbaudose unverrückbar im Kanal.

Oftmals muss die exakte Position der Geräteeinbaudose nachträglich justiert werden. Dies ist bei den vorbeschriebenen Geräteeinbaudosen jedoch nicht mehr möglich, weil die federnden Haltezungen nicht mehr zugänglich sind. Aus diesem Grunde konnten sich diese Konstruktionen in der Praxis nicht durchsetzen.

Statt dessen werden Geräteeinbaudosen verwendet, bei denen die seitlichen, das Deckelhalteprofil des Kanals untergreifenden Haltezungen nicht federnd sind, sondern mit Hilfe von Schrauben aktiviert und deaktiviert werden können. Man vergleiche beispielsweise die DE-A 41 03 643. Bei diesen Geräteeinbaudosen sind die Schrauben auch dann noch gut zugänglich, wenn die Dose bereits im Kanal montiert ist.

Wegen der Einfachheit und Betriebssicherheit sowie der guten Zugänglichkeit hat sich diese Haltekonstruktion in großem Umfang durchgesetzt. Sie wird nicht nur bei Geräteeinbaudosen angewandt, sondern auch bei Elektro-Installationsgeräten, die ohne Dose montiert werden können. Nachteilig ist allerdings die Tatsache, dass zum Aktivieren und Deaktivieren der Halterung wenigstens zwei Schrauben betätigt werden müssen, wobei oftmals viele Umdrehungen erforderlich sind. Das ist unbefriedigend.

Der vorliegenden Erfindung liegt daher die Aufgabe zugrunde, ein Gerät der eingangs genannten Art anzugeben, das sich in Kanälen frontrastend einsetzen lässt, welches dabei gleichzeitig gegen ein unbeabsichtigtes Lösen gesichert wird und welches trotzdem jederzeit schnell lösbar ist und somit seitlich verschoben oder auch ganz aus dem Kanal herausgenommen werden kann.

Diese Aufgabe wird gelöst durch ein Gerät mit den Merkmalen des Anspruchs 1.

Die vorliegende Erfindung greift auf die Idee der federnden Zungen zurück, integriert an diese Zungen jedoch besondere Betätigungsleisten, die bis zur Oberkante des Gerätes hochgezogen sind, so dass sie auch bei im Kanal montiertem Gerät von vorne betätigt werden können. Somit kann der Installateur durch einfaches Zusammenpressen der Halteleisten die Haltezungen vom Kanal lösen und das Einbaugerät seitlich verschieben oder aus dem Kanal herausnehmen. Sobald er die Betätigungsleisten wieder los lässt, spreizen sich die Haltezungen auf und das Gerät sitzt unlösbar im Kanal.

Gemäß einer Ausgestaltung der Erfindung sitzen die Haltezungen mit den angeformten Betätigungsleisten an den Seitenwänden des Gehäuses. Diese Position ist dann ohne weiteres möglich, wenn zwischen den Seitenwänden des Geräts und den Deckelhalteprofilen des Kanals ein ausreichender Abstand besteht.

Für den Fall, dass ein solcher Abstand nicht oder nicht ausreichend besteht, besitzt das Gehäuse im Bereich der Betätigungsleisten Aussparungen.

Alternativ dazu können die Haltezungen mit den angeformten Betätigungsleisten auch an den Stirnwänden des Gehäuses sitzen.

Anhand der Zeichnung soll die Erfindung in Form eines Ausführungsbeispiels näher erläutert werden. Es zeigen
- Fig. 1: einen Querschnitt durch einen Geräteeinbaukanal mit frontrastend eingesetztem Elektro-Installationsgerät,
- Fig. 2: eine Draufsicht auf Kanal und Gerät der Fig. 1 und
- Fig. 3: den Kanal der Fig. 1 mit gelöstem Gerät.

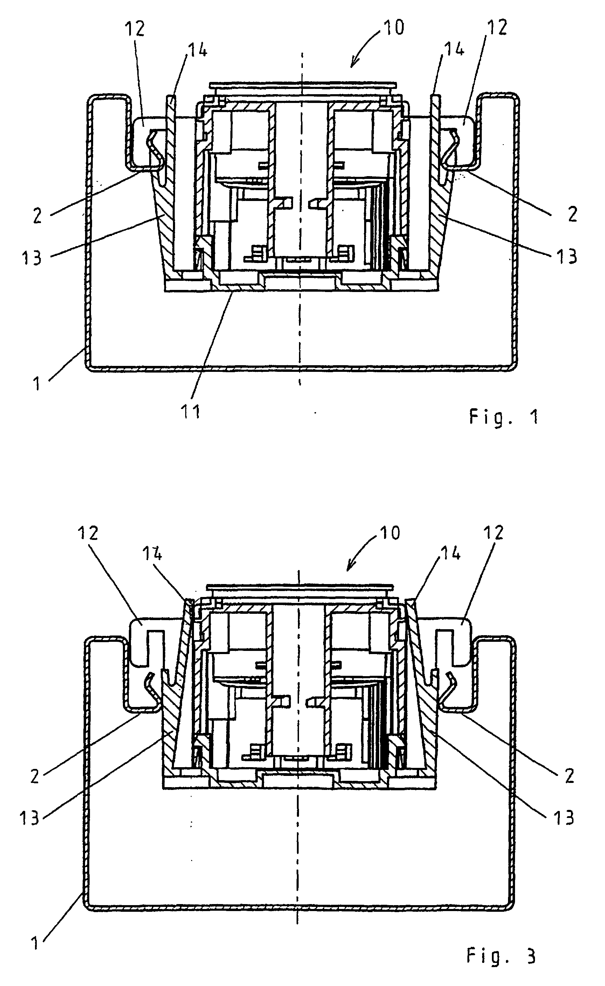

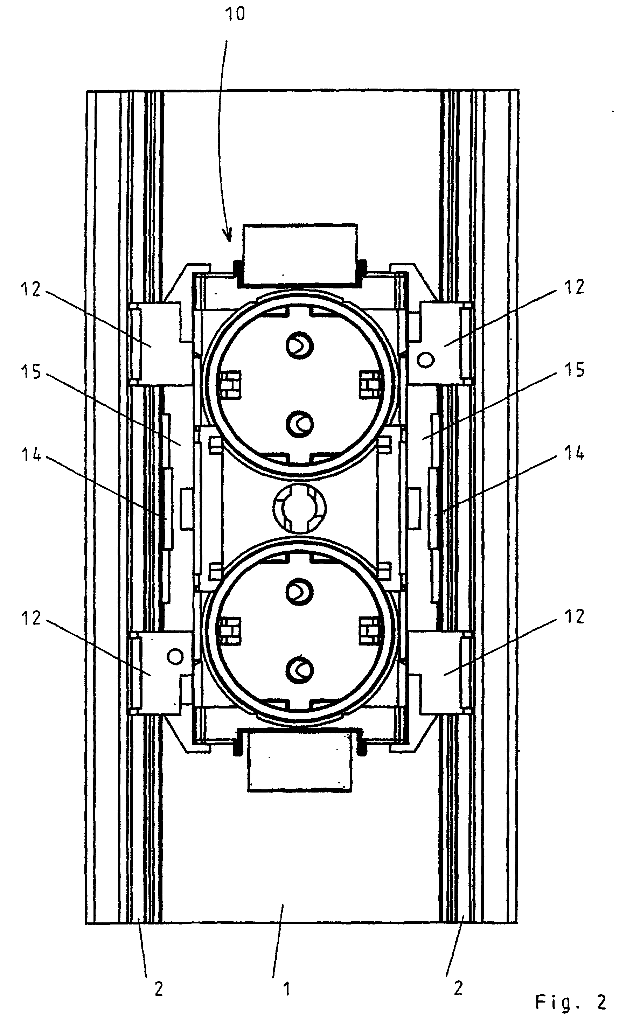

Fig. 1 als Querschnitt und Fig. 2 als Draufsicht zeigen einen Geräteeinbaukanal 1. Dieser hat einen etwa U-förmigen Querschnitt. Die die offene Oberseite des Kanals 1 begrenzenden Seitenwände tragen je ein Deckelhalteprofil 2.

In den Kanal 1 eingesetzt erkennt man ein Elektro-Installationsgerät 10, hier in Form einer Doppelsteckdose. Diese besitzt ein Gehäuse 11 aus Isoliermaterial. An den Seitenwänden des Gehäuses 11 sind Halterungen 12 angeformt, die mit dem Deckelhalteprofil 2 des Kanals 1 korrespondieren.

An den Seitenwänden des Gehäuses 11 sind des weiteren federnde Haltezungen 13 angeformt, die das Deckelhalteprofil 2 untergreifen und somit verhindern, dass das Gerät 10 aus dem Kanal 1 herausgezogen werden kann.

An den Haltezungen 13 sind Betätigungsleisten 14 angeformt, die bis in den Frontbereich des Gerätes 10 verlängert sind. Auf diese Weise überragen sie die Deckelhalteprofile 2 des Kanals 1 und sind daher auch bei montiertem Gerät 10 von vorne zugänglich.

Fig. 3 zeigt, dass sich die Haltezungen 13 vom Deckelhalteprofil 2 des Kanals 1 lösen, wenn der Installateur die Betätigungsleisten 14 zusammendrückt. Jetzt kann das Gerät 10 aus dem Kanal 1 entnommen und an anderer Stelle wieder eingesetzt werden.

## Patentansprüche

1. In einem Geräteeinbaukanal (1) zu montierendes Elektro-Installationsgerät (10), im wesentlichen umfassend
- ein quaderförmiges Gehäuse (11),
- mit dem Deckelhalteprofil (2) des Kanals (1) korrespondierende Halterungen (12) am Gehäuse (11),
- und federnde, das Deckelhalteprofil (2) untergreifende Haltezungen (13) am Gehäuse (11),
**gekennzeichnet durch** die Merkmale:
- an den Haltezungen (13) sind Betätigungsleisten (14) angeformt, die bis in den Frontbereich des Gerätes (10) verlängert sind,
- die Betätigungsleisten (14) sind bei im Kanal (1, 2) montiertem Gerät (10) von vorne zu betätigen.

2. Gerät nach Anspruch 1 **gekennzeichnet durch** das Merkmal:
- die Haltezungen (13) mit den angeformten Betätigungsleisten (14) sitzen an den Seitenwänden des Gehäuses (11).

3. Gerät nach Anspruch 1 oder 2, **gekennzeichnet durch** das Merkmal:
- das Gehäuse (11) besitzt im Bereich der Betätigungsleisten (14) Aussparungen (15).

## Claims

1. Electrical installation appliance (10) to be mounted in built-in appliance trunking (1), essentially comprising
- a cuboid housing (11),
- with holders (12) at the housing (11) which correspond to the cover retaining profile (2) of the trunking (1),
- and resilient retaining tongues (13), which engage under the cover retaining profile (2), at the housing (11),
**characterised by** the features:
- operating strips (14) are moulded onto the retaining tongues (13), these strips being extended into the front region of the appliance (10),
- the operating strips (14) are to be operated from the front when the appliance (10) is mounted in the trunking (1, 2).

2. Appliance according to Claim 1, **characterised by** the feature:
- the retaining tongues (13) with the moulded-on operating strips (14) are fitted at the side walls of the housing (11).

3. Appliance according to Claim 1 or 2, **characterised by** the feature:
- the housing (11) has recesses (15) in the region of the operating strips (14).

## Revendications

1. Appareil d'installation électrique (10) à monter dans une canalisation à appareils incorporés (1), comprenant essentiellement
- un coffret (11) en forme de parallélépipède,
- des attaches (12) correspondant au profilé de retenue du couvercle (2) de la canalisation (1) sur le coffret (11),
- et des languettes de retenue (13) à ressorts sur le coffret (11) qui saisissent le profilé de retenue du couvercle (2) par-dessous,
**caractérisé en ce que** :
- des listels de manoeuvre (14), qui sont prolongés jusque dans la zone frontale de l'appareil (10), sont formés dans les languettes de retenue (13),
- les listels de manoeuvre (14) doivent être manoeuvrés par l'avant pour l'appareil (10) monté dans la canalisation (1, 2).

2. Appareil selon la revendication 1, **caractérisé en ce que** :
- les languettes de retenue (13) avec les listels de manoeuvre (14) formés sont calées sur les parois latérales du coffret (11).

3. Appareil selon la revendication 1 ou 2, **caractérisé en ce que** :
- le coffret (11) comporte des évidements (15) dans la zone des listels de manoeuvre (14).
